# EUROPEAN PATENT SPECIFICATION

(11) **EP 3 622 855 B1**
(45) Date of publication and mention of the grant of the patent: **26.07.2023**
(21) Application number: 18917852.8
(22) Date of filing: 31.10.2018
(51) Int. Cl.: A47B 49/00, A47B 97/00, B25J 15/00, G07F 11/16, G07F 17/12

(54) **STORAGE CABINET WITH AN OVERTURN DEVICE**
LAGERSCHRANK MIT VORRICHTUNG ZUM AUSRICHTEN GELAGERTER WAREN
ARMOIRE DE RANGEMENT AVEC DISPOSITIF DE RENVERSEMENT

(30) Priority: 09.05.2018 CN 201820687067 U
(43) Date of publication of application: 18.03.2020
(73) Proprietor: Shenzhen Hive Box Technology Co., Ltd, Shenzhen, Guangdong 518000 (CN)
(72) Inventor: LEI, Honggang, Shenzhen, Guangdong 518000 (CN)
(74) Representative: Grünecker Patent- und Rechtsanwälte PartG mbB
(86) International application number: PCT/CN2018/113022
(87) International publication number: WO 2019/214176

(56) References cited:
- WO-A1-2006/052863
- WO-A2-2006/124211
- CN-A- 105 398 728
- CN-U- 201 647 668
- CN-U- 204 549 359
- JP-A- H09 110 109
- US-A1- 2017 181 341

## Description

### TECHNICAL FIELD

The present invention relates to storage cabinet with an overturn device.

### BACKGROUND

With vigorous development of high new technologies, life quality of people has been improved in recent years, people life becomes convenient. In real life, intelligent storage cabinets are widely used. Through the intelligent storage cabinets, articles are directly stored in different partitions of the cabinets, thus occupied space may be saved. Such a storage cabinet is already known for example from WO 2006 052 863 A1.

However, heights of a polyhedral storage cabinet (e.g. an octagonal cabinet), a shelf for storing an article and a single-layer shelf in related art are fixed, the cabinet machine calculates the number of layers of the shelf occupied by the article according to a detected height of the stored article, so as to select an optimal storage position, and then a tray containing the article is stored in a designated position through stretching, rotation and moving of a conveying mechanism.

But, when people perform a storage operation, they often casually place an article on the tray at a pick-up port, which may cause improper placement of the article. When the article is improperly place in terms of the height or the position, the eccentrical placement of the article on the tray will make the article to be easily thrown out or dropped during transportation processes of rotation and rising. Moreover, the article stored in the shelf has a height larger than an actual required height, more layers of the shelf are occupied, which results in a waste of storage space.

### SUMMARY

The present invention provides a storage cabinet with an overturn device, so that an improperly placed article can be overturned by the overturn device, then the article is placed in a proper position of a tray, thereby the article is protected, while utilization rate of storage space of the storage cabinet is improved.

A storage cabinet with an overturn device is provided by an embodiment. The overturn device is arranged in the storage cabinet and the device includes an overturn device body, the overturn device body includes a support frame, a rotation mechanism configured to drive the overturn device body to rotate, a clamping mechanism configured to clamp an article, an overturn mechanism configured to drive the clamping mechanism to overturn the article, and a lifting mechanism configured to drive the clamping mechanism to move up and down; the rotation mechanism, the clamping mechanism, the overturn mechanism and the lifting mechanism are arranged on the support frame.

In an embodiment the storage cabinet includes a cabinet body, a detection mechanism, a control mechanism and the overturn device as mentioned above, the cabinet body includes a tray, the tray is arranged in the cabinet body, the detection mechanism is arranged in the cabinet body, the detection mechanism is configured to detect a size of an article and a position of the article on the tray, and the control mechanism is configured to control working states of the detection mechanism and the overturn device to control the overturn device to place the article at a designated position of the tray according to a detection result of the detection mechanism.

### BRIEF DESCRIPTION OF DRAWINGS

FIG. 1 is a schematic structural diagram of an overturn device according to an embodiment;
FIG. 2 is a schematic structural diagram of an overturn device arranged at an access port in the storage cabinet according to an embodiment;
FIG. 3a is a schematic diagram 1 of adjusting orientation of an improperly placed article by an overturn device according to an embodiment;
FIG. 3b is a schematic diagram 2 of adjusting orientation of an improperly placed article by an overturn device according to an embodiment;
FIG. 3c is a schematic diagram 3 of adjusting orientation of an improperly placed article by an overturn device according to an embodiment;
FIG. 3d is a schematic diagram 4 of adjusting orientation of an improperly placed article by an overturn device according to an embodiment;
FIG. 4 is a schematic diagram of a state of an article placed on a tray by an overturn device according to an embodiment;
FIG. 5 is a schematic diagram of connection of a first driving component of an overturn device to a turntable of the overturn device according to an embodiment;
FIG. 6 is a schematic diagram of connection of a second driving component of an overturn device to a sucking disc of the overturn device according to an embodiment;
FIG. 7 is a schematic diagram of connection of a third driving component of an overturn device to a connection piece of the overturn device according to an embodiment;
FIG. 8 is a schematic diagram of connection of a fourth driving component of an overturn device to a slider of the overturn device according to an embodiment;
FIG. 9 is a schematic diagram illustrating a structure of an overturn device arranged at a telescopic vehicle mechanism in a storage cabinet according to an embodiment;
FIG. 10 is a schematic diagram illustrating connection a control mechanism of a storage cabinet according to an embodiment;
FIG. 11 is a schematic diagram of connection of an overturn device body of a storage cabinet to a lifting mechanism according to an embodiment

### DETAILED DESCRIPTION

Orientation terms in embodiments, such as left, right, upper and lower, are only relative concepts or reference to a normal use state of a product, and should not be considered as limitation.

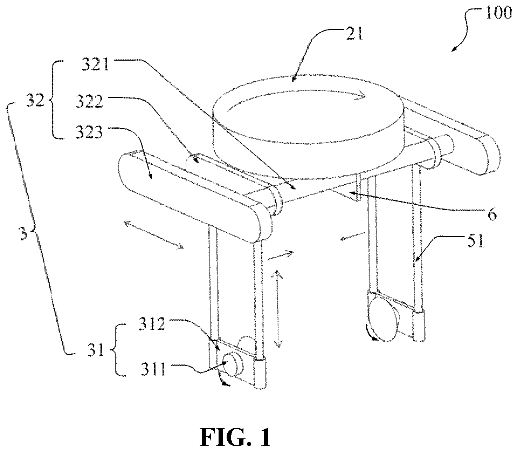

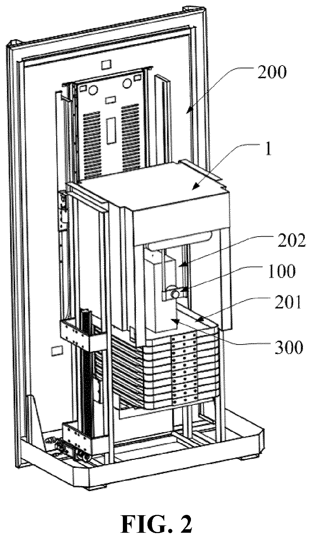

Referring to FIGs. 1 and 2, an overturn device is provided according to an embodiment, the overturn device is arranged in a storage cabinet 200, the overturn device includes an overturn device body 100, the overturn device body 100 includes a support frame 1, a rotation mechanism (not shown) configured to drive the overturn device body 100 to rotate, a clamping mechanism 3 configured to clamp an article 300, an overturn mechanism (not shown) configured to drive the clamping mechanism 3 to overturn the article 300, and a lifting mechanism (not shown) configured to drive the clamping mechanism to move up and down; the rotation mechanism, the clamping mechanism 3, the overturn mechanism and the lifting mechanism are arranged on the support frame 1. Through the overturn device body 100, the article 300 can be overturned and moved in multiple directions, so that the article 300 is rotated to an optimal position and then placed on a tray. On the one hand, it is ensured that the article 300 will not be easily thrown out or dropped during transportation processes of rotation and rising; on the other hand, shelf height space of the storage cabinet is utilized to maximum extent, and utilization rate of storage space of the storage cabinet is improved.

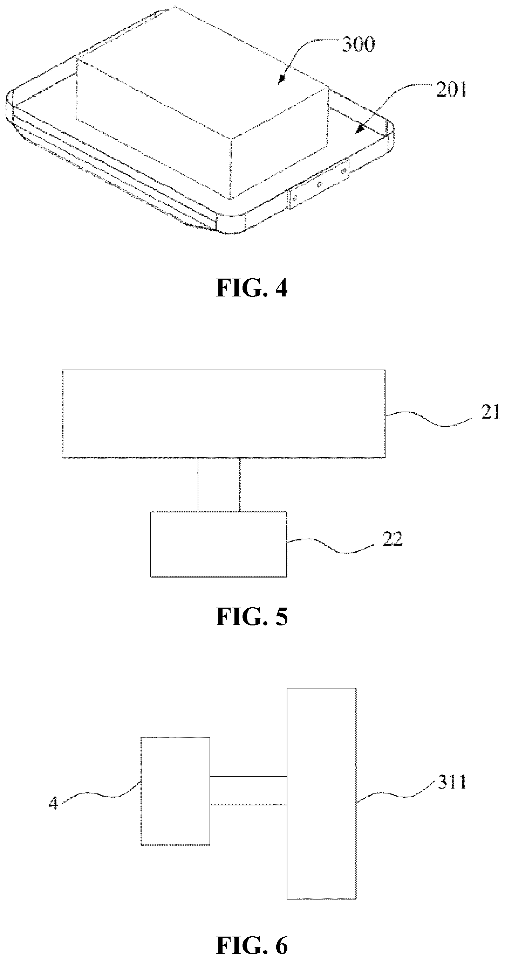

In an embodiment, as shown in FIG. 1 and FIG. 5, the rotation mechanism includes a turntable 21 configured to rotate the overturn device body 100 and a first driving component 22 configured to drive the turntable 21 to rotate, the first driving component 22 is connected to the turntable 21, the turntable 21 is arranged on the support frame 1, the turntable 21 is driven by the first driving component 22 to rotate, and then the clamping mechanism 3, the overturn mechanism and the lifting mechanism are driven by the turntable 21 to rotate, i.e., the entire overturn device body 100 is driven to rotate. In an embodiment, the rotation mechanism makes the entire overturn device body 100 rotate in a vertical direction (Z axis direction).

Still referring to FIGs. 1 and 2, the clamping mechanism 3 includes a clamping component 31 configured to clamp the article 300 and a translation component 32 configured to control the clamping component 31 to open and close according to a size of the article 300, the translation component 32 is arranged on the turntable 21 through a mounting piece 6, the lifting mechanism is arranged on the translation component 32, and the clamping component 31 is arranged on the lifting mechanism. The lifting mechanism drives the clamping component 31 to descend to the middle of a height direction of the article, and the clamping component 31 is located at both sides of the article, and then the clamping component 31 is closed to clamp the article 300 through the translation component 32, after that, the lifting mechanism rises the clamping component 31 and the article to a certain height, then the translation component 32 moves the article 300 to an optimal position, and combined with the lifting mechanism, the clamping component 31 and the article 30 are caused to descend to place the article 300 at the optimal position on the tray, finally, the translation component 32 enables the clamping component 31 to release the article 300, then the article 300 is placed on the tray.

In an embodiment, the clamping component 31 includes two sucking discs 311 and a connection piece 312 configured to mount the sucking discs 311, the sucking discs 311 are arranged on a connection piece 312, and the connection piece 312 is arranged on the lifting mechanism, the two sucking discs 311 may clamp the article 300 in an attaching manner, thus moreover the article 300 is protected from damage. The connection piece 312 is sleeved on a guiding column 51, so that the sucking discs 311 may slide up and down on the guiding column.

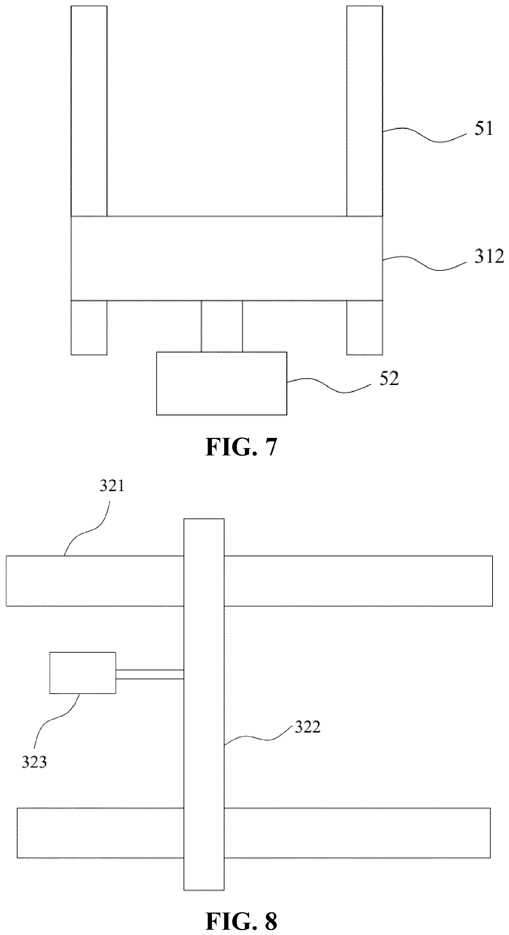

Still referring to FIGs. 1 and 7, the lifting mechanism includes two groups of guiding columns 51 and a third driving component 52 configured to drive the sucking discs 311 to move up and down along the guiding columns 51, the connection piece 312 is sleeved on the guiding columns 51, the third driving component 52 drives the connection piece 312 to move up and down along the guiding columns 51, the connection piece 312 is driven to move up along the guiding columns 51 by the third driving component 52, thus the article 300 picked up by the sucking discs 311 is driven to rise, so as to reach a required height for overturning the article 300, then the article 300 is overturned horizontally (along X axis or Y axis) by the overturn mechanism, then after the article 300 with the adjusted height is descended onto the tray, the clamping mechanism 3 is released.

As shown in FIGs. 1 and 8, the translation component 32 includes a support rod 321 configured to be connected to the turntable 21, a slider 322 configured to drive the guiding columns 51 to move to adjust a spacing between the two sucking discs 311, and a fourth driving component 323 driving the slider 322 to slide on the support rod 321. In an embodiment, the support rod 321 is arranged at the bottom of the turntable 21 through the mounting piece 6, the slider 322 is arranged on the support rod 321, the guiding columns 51 are arranged on the slider 322, the fourth driving component 323 drives the slider 322 to slide on the support rod 321, and through cooperation between the slider 322 and the support rod 321, the sucking discs 311 may grip the article 300 and move it to the optimal position. In an embodiment, each of both ends of the support rod 321 is provided with a stopper 323 to prevent the slider 322 from sliding out.

In an embodiment, the overturn mechanism is coupled to the clamping mechanism 3, as shown in FIG. 6, the overturn mechanism includes a second driving component 4 configured to drive the sucking discs 311 to rotate to overturn the article 300, and the sucking discs 311 are rotatably mounted on the connection piece 312. After the sucking discs 311 grip the article 300, the lifting mechanism rises the article 300 to the required height for overturning the article 300 according to the size of the article 300, then the sucking discs 311 are driven by the second driving component to rotate, so that an overturn of the article 300 along a connection line between the two sucking discs 311 completes, and the article 300 is overturned to the optimal placement height.

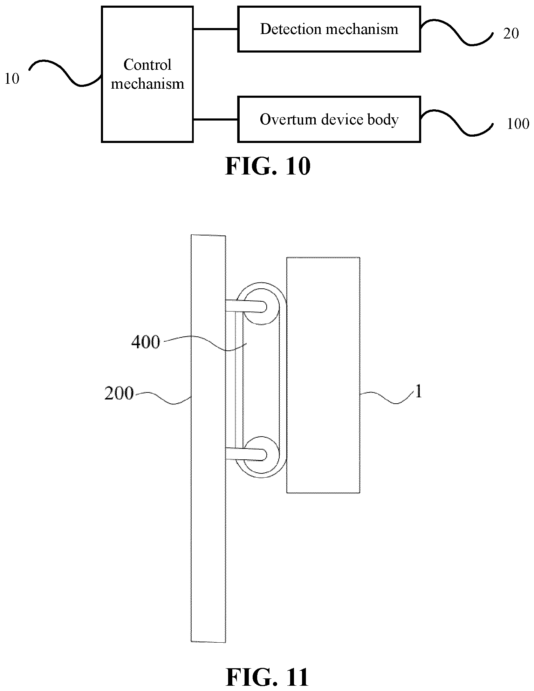

The overturn device of the storage cabinet further includes a moving mechanism 400, which is configured to drive the overturn device body 100 to move, as shown in FIG. 11, the support frame 1 is arranged on the moving mechanism 400; through combination between the moving mechanism 400 and the rotation mechanism, the article 300 clamped by the sucking discs 311 may move and rotate in multiple directions, so that the article 300 reaches the optimal placement position to save the occupied space with a maximum extent.

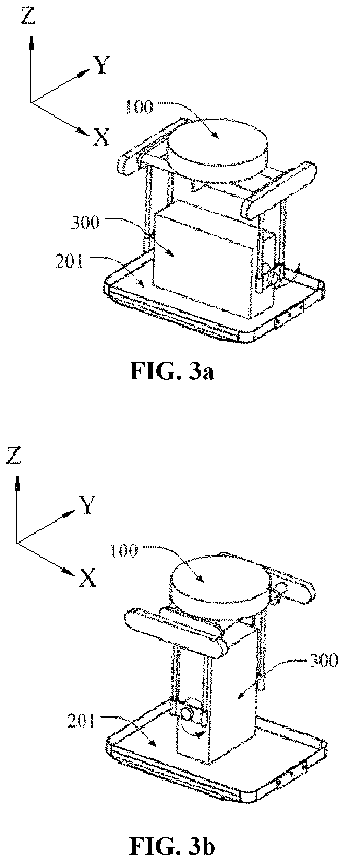

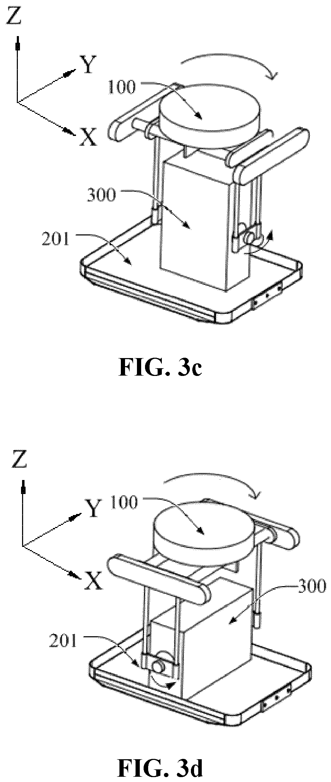

The overturn device body 100 is configured to place the article 300 according to user needs, rotation and moving manner of the article 300 will be described in detail below with reference to FIGs. 3 and 4.

When the article is at a position shown in FIG. 3a, the clamping mechanism 3 clamps the article 300, then the lifting mechanism rises the article 300 to the required height for overturning, then the overturn mechanism overturns the article 300 along the X axis in an overturn direction shown by the arrow in FIG. 3a, finally, the article 300 is descended to the tray 201 by the lifting mechanism and the clamping mechanism 3, and the sucking discs 311 releases the article 300, so that the article 300 may be placed at the optimal position shown in FIG. 3.

When the article is at a position shown in FIG. 3b, after the sucking discs 311 clamp the article and rise the article to a certain height, the article 300 is overturned along the Y axis through the overturn mechanism combined with the clamping mechanism 3, that is, the sucking discs 311 rotate in a direction as the arrow shown in FIG. 3b, and then the overturn device is translated over a certain distance along the X axis, so that the article may be placed at the optimal position.

When the article is at a position shown in FIG. 3c, after the sucking discs 311 clamp the article and rise the article to a certain height, the turntable 21 rotates, so as to rotate the overturn device body 100 by 90 degrees along the Z axis direction, that is, to rotate the overturn device body 100 by 90 degrees in a direction as the arrow shown in FIG. 3c, and then the article 300 is overturned along the Y axis through the overturn mechanism combined with the clamping mechanism 3, so that the article 300 may be placed at the optimal position.

When the article is at a position shown in FIG. 3d, after the sucking discs 311 clamp the article and rise the article to a certain height, the overturn device body 100 may rotate by 90 degrees along the Z axis through the turntable 21, that is, the overturn device body 100 rotates by 90 degrees in a direction as the arrow shown in FIG. 3d, and then the article 300 is overturned along the X axis through the overturn mechanism combined with the clamping mechanism 3, so that the article 300 may be placed at the optimal position.

Therefore, no matter where a user places the article, the article 300 may be placed at an optimal position as shown in FIG. 4 through the overturn device, which is beneficial for a telescopic vehicle in the storage cabinet 200 to take and place the tray, and when the overturn and lifting device rotates and moves, the article will not be thrown out or dropped, and the storage space of the cabinet can further be properly utilized to improve the storage space of the storage cabinet.

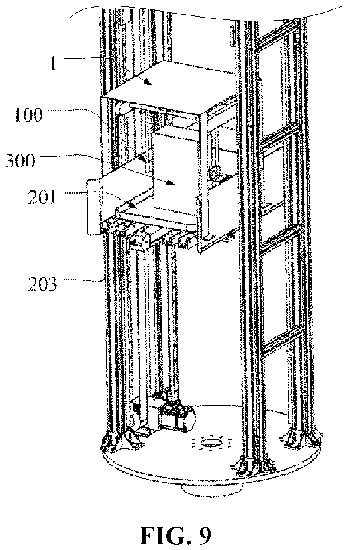

Still referring to FIGs. 2, 9 and 10, based on the above-mentioned overturn device of the storage cabinet 200, this embodiment further correspondingly provides a storage cabinet 200, the storage cabinet 200 includes a cabinet body, and a tray 201 is arranged in the cabinet body, the cabinet body is further provided with a detection mechanism 20, an overturn device and a control mechanism 10, the detection mechanism 20 is configured to detect the size of the article 300 and a position of the article 300 on the tray 201, the control mechanism 10 is configured to control working states of the detection mechanism 20 and the overturn device 100, and the control mechanism 10 controls the overturn device body 100 to place the article 300 at the designated position of the tray 201 according to a detection result of the detection mechanism 20.

In an embodiment, the cabinet body is further provided with a pick-up port 202 and a telescopic vehicle mechanism 203, and the overturn device is arranged at the pick-up port 202 or the telescopic vehicle mechanism 203. In an embodiment, the overturn device is arranged at an upper part of the pick-up port 202 or the telescopic vehicle mechanism 203, the overturn device may further be arranged at other position of the storage cabinet as long as the normal use of the storage cabinet is not affected.

In an example where the turnover device is arranged at the pick-up port 202, when the user places the article 300 on the tray 201, the size, position, orientation and the like of the article 300 are detected by the detection mechanism, the control mechanism 10 determines whether an adjustment is needed. If the adjustment is needed, the control mechanism 10 calculates in which orientation the adjustment needs to be performed to reach the optimal placement position, and sends a control signal to the overturn device to control the overturn device to complete the orientation adjustment of the article 300. After the article 300 is placed at the optimal position of the tray, the telescopic vehicle mechanism 203 of the storage cabinet takes the tray, and then a rotation and lifting device drives the tray to rotate into a shelf set by a lifting pair to store the tray on the shelf. According to the present embodiment, the article 300 is overturned in three dimensions, so that the article 300 is placed at a most proper height; on the one hand, the article 300 is ensured not to be easily thrown out or dropped during the transportation processes of rotation and rising; on the other hand, the height space of the cabinet machine is maximized, and the utilization rate of the storage space is improved.

In an embodiment, the storage cabinet 200 is a delivery cabinet, an article storage cabinet or a book borrowing cabinet, so the storage cabinet 200 in this embodiment may be used in, for example, delivery storage, delivery sending and delivery receiving, which may further be used for temporary storage of an article around a shopping mall, and borrowing a book from a library, and etc.

In the present embodiment, the overturn device is arranged in the storage cabinet, the overturn device body includes a support frame 1, a rotation mechanism configured to drive the overturn device body to rotate, a clamping mechanism configured to clamp an article, an overturn mechanism configured to drive the clamping mechanism to overturn the article, and a lifting mechanism configured to control the clamping mechanism to move up and down, the rotation mechanism, the clamping mechanism, the overturn mechanism and the lifting mechanism are arranged on the support frame 1, through the rotation mechanism, the clamping mechanism, the overturn mechanism and the lifting mechanism, a real article can be overturned and moved in multiple directions, so that the article is placed at a most proper position; on the one hand, the article is ensured not to be easily thrown out or dropped during the transportation processes of rotation and rising; on the other hand, the height space of the storage cabinet is utilized to the maximum extent, and the utilization rate of the storage space is improved.

The overturn device provided by the embodiment has a simple structure with low cost, reformation can be performed on a storage cabinet in related technologies without damaging the main body of the existing storage cabinet, and it is suitable to be widely popularized.

At the same time, the storage cabinet of this embodiment can be used in, for example, delivery storage, delivery sending and delivery outgoing, which can also be used for temporary storage of an article around a shopping mall, and it can be used in various scenarios.

## Claims

1. A storage cabinet with an overturn device, wherein the overturn device comprises an overturn device body (100), the overturn device body (100) comprises:
a support frame (1);
a rotation mechanism, which is configured to drive the overturn device body (100) to rotate;
a clamping mechanism (3), which is configured to clamp an article (300);
an overturn mechanism, which is configured to drive the clamping mechanism (3) to overturn the article (300); and
a lifting mechanism, which is configured to drive the clamping mechanism (3) to move up and down;
wherein the rotation mechanism, the clamping mechanism (3), the overturn mechanism and the lifting mechanism are arranged on the support frame (100);
wherein the rotation mechanism comprises a turntable (21) configured to rotate the overturn device body (100) and a first driving component (22) configured to drive the turntable (21) to rotate, wherein the first driving component (22) is connected to the turntable (21), and the turntable (21) is arranged on the support frame (1);
the clamping mechanism (3) comprises a clamping component (31) configured to clamp the article (300) and a translation component (32) configured to control the clamping component (21) to open and close according to a size of the article (300), wherein the translation component (32) comprises a mounting piece (6), the translation component (32) is further configured to be arranged on the turntable (21) through the mounting piece (6), the lifting mechanism is arranged on the translation component (32), and the clamping component (31) is arranged on the lifting mechanism;
**characterized in that** the clamping component (31) comprises two sucking discs (311) and a connection piece (312) configured to mount the sucking discs (311), wherein the sucking discs (311) are arranged on the connection piece (312), and the connection piece (312) is arranged on the lifting mechanism.

2. The storage cabinet with the overturn device according to claim 1, wherein the overturn mechanism is connected to the clamping mechanism, and the overturn mechanism comprises a second driving component (4) configured to drive the sucking discs (311) to rotate for overturn of the article (300).

3. The storage cabinet with the overturn device according to claim 2, wherein the lifting mechanism comprises two groups of guiding columns (51) and a third driving component (52) configured to drive the sucking discs (311) to move up and down along the guiding columns (51), wherein the connection piece (312) is sleeved on the guiding columns (51), and the third driving component (52) drives the connection piece (312) to move up and down along the guiding columns (51).

4. The storage cabinet with the overturn device according to claim 3, wherein the translation component (32) comprises a support rod (321) configured to be connected to the turntable (21), a slider (322) configured to drive the guiding columns (51) to move to control a spacing between the two sucking discs (311), and a fourth drive component (323) to drive the slider (322) to slide on the support rod (321), wherein the slider (322) is arranged on the support rod (321), the guiding columns (51) are arranged on the slider (322), and the fourth driving component (323) drives the slider (322) to slide on the support rod (321).

5. The storage cabinet with the overturn device according to claim 1, further comprising:
a moving mechanism (400), which is configured to drive the overturn device body (100) to move, wherein the support frame is arranged on the moving mechanism.

6. The storage cabinet with the overturn device according to claim 1, further comprising a cabinet body, a detection mechanism (20), a control mechanism (10),
wherein the cabinet body comprises a tray (201), the tray is arranged in the cabinet body, the detection mechanism is arranged in the cabinet body, the detection mechanism (20) is configured to detect a size of an article (300) and a position of the article (300) on the tray (201), and the control mechanism (10) is configured to control working states of the detection mechanism (20) and the overturn device to control the overturn device to place the article (300) at a designated position of the tray (201) according to a detection result of the detection mechanism (20).

7. The storage cabinet with the overturn device according to claim 6, further comprising:
a telescopic vehicle mechanism (203), which is arranged in the cabinet body, wherein the cabinet body is further provided with a pick-up port (202), and the overturn device is arranged at the pick-up port (202) or the telescopic vehicle mechanism (203).

## Patentansprüche

1. Lagerschrank mit einer Ausrichtungsvorrichtung, wobei die Ausrichtungsvorrichtung einen Ausrichtungsvorrichtungskörper (100) aufweist, wobei der Ausrichtungsvorrichtungskörper (100) umfasst:
einen Halterahmen (1),
einen Drehmechanismus, der konfiguriert ist zum Antreiben des Ausrichtungsvorrichtungskörpers (100) für eine Drehung,
einen Klemmmechanismus (3), der konfiguriert ist zum Klemmen eines Artikels (300),
einen Ausrichtungsmechanismus, der konfiguriert ist zum Antreiben des Klemmmechanismus (3) für ein Ausrichten des Artikels (300), und
einen Hebemechanismus, der konfiguriert ist zum Antreiben des Klemmmechanismus (3) für eine Bewegung nach oben und unten,
wobei der Drehmechanismus, der Klemmmechanismus (3), der Ausrichtungsmechanismus und der Hebemechanismus an dem Halterahmen (100) angeordnet sind,
wobei der Drehmechanismus eine Drehscheibe (21), die konfiguriert ist zum Drehen des Ausrichtungsvorrichtungskörpers (100), und eine erste Antriebskomponente (22), die konfiguriert ist zum Antreiben des Drehtisches (21) für eine Drehung, umfasst, wobei die erste Antriebskomponente (22) mit dem Drehtisch (21) verbunden ist und wobei der Drehtisch (21) an dem Halterahmen (1) angeordnet ist,
wobei der Klemmmechanismus (3) eine Klemmkomponente (31), die konfiguriert ist zum Klemmen des Artikels (300) und eine Verschiebungskomponente (32), die konfiguriert ist zum Steuern der Klemmkomponente (21) für ein Öffnen und Schließen in Entsprechung zu der Größe des Artikels (300), umfasst, wobei die Verschiebungskomponente (32) einen Montageteil (6) umfasst, wobei die Verschiebungskomponente (32) weiterhin konfiguriert ist, um an dem Drehtisch (21) durch den Montageteil (6) angeordnet zu werden, wobei der Hebemechanismus an der Verschiebungskomponente (32) angeordnet ist und wobei die Klemmkomponente (31) an dem Hebemechanismus angeordnet ist,
**dadurch gekennzeichnet, dass** die Klemmkomponente (31) zwei Saugscheiben (311) und einen Verbindungsteil (312), der konfiguriert ist für das Montieren der Saugscheiben (311), umfasst, wobei die Saugscheiben (311) an dem Verbindungsteil (312) angeordnet sind und wobei der Verbindungsteil (312) an dem Hebemechanismus angeordnet ist.

2. Lagerschrank mit einer Ausrichtungsvorrichtung nach Anspruch 1, wobei der Ausrichtungsmechanismus mit dem Klemmmechanismus verbunden ist und wobei der Ausrichtungsmechanismus eine zweite Antriebskomponente (4), die konfiguriert ist zum Antreiben der Saugscheiben (311) für eine Drehung zum Ausrichten des Artikels (300), umfasst.

3. Lagerschrank mit einer Ausrichtungsvorrichtung nach Anspruch 2, wobei der Hebemechanismus zwei Gruppen von Führungssäulen (51) und eine dritte Antriebskomponente (52), die konfiguriert ist zum Antreiben der Saugscheiben (311) für eine Bewegung nach oben und unten entlang der Führungssäulen (51), umfasst, wobei der Verbindungsteil (312) auf die Führungssäulen (51) gesteckt ist und die dritte Antriebskomponente (52) den Verbindungsteil (312) für eine Bewegung nach oben und unten entlang der Führungssäulen (51) antreibt.

4. Lagerschrank mit einer Ausrichtungsvorrichtung nach Anspruch 3, wobei die Verschiebungskomponente (32) eine Haltestange (321), die konfiguriert ist für eine Verbindung mit der Drehscheibe (21), einen Gleiter (322), der konfiguriert ist zum Antreiben der Führungssäulen (51) für eine Bewegung zum Steuern des Abstands zwischen den zwei Saugscheiben (311), und eine vierte Antriebskomponente (323) zum Antreiben des Gleiters (322) für ein Gleiten an der Haltestange (321), umfasst, wobei der Gleiter (322) an der Haltestange (321) angeordnet ist, wobei die Führungssäulen (51) an dem Gleiter (322) angeordnet sind und wobei die vierte Antriebskomponente (323) den Gleiter (322) für ein Gleiten an der Haltestange (321) antreibt.

5. Lagerschrank mit einer Ausrichtungsvorrichtung nach Anspruch 1, der weiterhin umfasst:
einen Bewegungsmechanismus (400), der konfiguriert ist zum Antreiben des Ausrichtungsvorrichtungskörpers (100) für eine Bewegung, wobei der Halterahmen an dem Bewegungsmechanismus angeordnet ist.

6. Lagerschrank mit einer Ausrichtungsvorrichtung nach Anspruch 1, der weiterhin einen Schrankkörper, einen Erfassungsmechanismus (20) und einen Steuermechanismus (10) umfasst,
wobei der Schrankkörper eine Ablage (201) umfasst, wobei die Ablage in dem Schranckörper angeordnet ist, wobei der Erfassungsmechanismus in dem Schrankkörper angeordnet ist, wobei der Erfassungsmechanismus (20) konfiguriert ist zum Erfassen einer Größe eines Artikels (300) und einer Position des Artikels (300) auf der Ablage (201), und wobei der Steuermechanismus (10) konfiguriert ist zum Steuern von Arbeitszuständen des Erfassungsmechanismus (20) und der Ausrichtungsvorrichtung, um die Ausrichtungsvorrichtung für ein Platzieren des Artikels (300) an einer designierten Position der Ablage (201) gemäß einem Erfassungsergebnis des Erfassungsmechanismus (20) zu platzieren.

7. Lagerschrank mit einer Ausrichtungsvorrichtung nach Anspruch 6, der weiterhin umfasst:
einen teleskopischen Transportmechanismus (203), der in dem Schrankkörper angeordnet ist, wobei der Schrankkörper weiterhin mit einer Aufgreiföffnung (202) versehen ist und wobei die Ausrichtungsvorrichtung an der Aufgreiföffnung (202) oder dem teleskopischen Transportmechanismus (203) angeordnet ist.

## Revendications

1. Armoire de rangement présentant un dispositif de renversement, le dispositif de renversement comprenant un corps de dispositif de renversement (100), le corps de dispositif de renversement (100) comprenant :
un cadre de support (1) ;
un mécanisme de rotation, qui est conçu pour entraîner le corps de dispositif de renversement (100) à tourner ;
un mécanisme de serrage (3), qui est conçu pour serrer un article (300) ;
un mécanisme de renversement, qui est conçu pour entraîner le mécanisme de serrage (3) à renverser l'article (300) ; et
un mécanisme de levage, qui est conçu pour entraîner le mécanisme de serrage (3) à se déplacer vers le haut et vers le bas ;
le mécanisme de rotation, le mécanisme de serrage (3), le mécanisme de renversement et le mécanisme de levage étant disposés sur le cadre de support (100) ;
le mécanisme de rotation comprenant une table tournante (21) conçue pour faire tourner le corps de dispositif de renversement (100) et un premier composant d'entraînement (22) conçu pour entraîner la table tournante (21) à tourner, le premier composant d'entraînement (22) étant raccordé à la table tournante (21), et la table tournante (21) étant disposée sur le cadre de support (1) ;
le mécanisme de serrage (3) comprenant un composant de serrage (31) conçu pour serrer l'article (300) et un composant de translation (32) conçu pour commander au composant de serrage (21) de s'ouvrir et de se fermer en fonction d'une taille de l'article (300), le composant de translation (32) comprenant une pièce de montage (6), le composant de translation (32) étant en outre conçu pour être disposé sur la table tournante (21) à travers la pièce de montage (6), le mécanisme de levage étant disposé sur le composant de translation (32), et le composant de serrage (31) étant disposé sur le mécanisme de levage ;
**caractérisée en ce que** le composant de serrage (31) comprend deux disques d'aspiration (311) et une pièce de raccordement (312) conçue pour monter les disques d'aspiration (311), les disques d'aspiration (311) étant disposés sur la pièce de raccordement (312), et la pièce de raccordement (312) étant disposée sur le mécanisme de levage.

2. Armoire de rangement présentant le dispositif de renversement selon la revendication 1, le mécanisme de renversement étant raccordé au mécanisme de serrage, et le mécanisme de renversement comprenant un second composant d'entraînement (4) conçu pour entraîner les disques d'aspiration (311) à tourner pour renverser l'article (300).

3. Armoire de rangement présentant le dispositif de renversement selon la revendication 2, le mécanisme de levage comprenant deux groupes de colonnes de guidage (51) et un troisième composant d'entraînement (52) conçu pour entraîner les disques d'aspiration (311) à se déplacer vers le haut et vers le bas le long des colonnes de guidage (51), la pièce de raccordement (312) étant emmanchée sur les colonnes de guidage (51), et le troisième composant d'entraînement (52) entraînant la pièce de raccordement (312) à se déplacer vers le haut et vers le bas le long des colonnes de guidage (51).

4. Armoire de rangement présentant le dispositif de renversement selon la revendication 3, le composant de translation (32) comprenant une tige de support (321) conçue pour être raccordée à la table tournante (21), un élément coulissant (322) conçu pour entraîner les colonnes de guidage (51) à se déplacer pour commander un espacement entre les deux disques d'aspiration (311), et un quatrième composant d'entraînement (323) pour entraîner l'élément coulissant (322) à coulisser sur la tige de support (321), l'élément coulissant (322) étant disposé sur la tige de support (321), les colonnes de guidage (51) étant disposées sur l'élément coulissant (322), et le quatrième composant d'entraînement (323) entraînant l'élément coulissant (322) à coulisser sur la tige de support (321) .

5. Armoire de rangement présentant le dispositif de renversement selon la revendication 1, comprenant en outre :
un mécanisme de déplacement (400), qui est conçu pour amener le corps de dispositif de renversement (100) à se déplacer, le cadre de support étant disposé sur le mécanisme de déplacement.

6. Armoire de rangement présentant le dispositif de renversement selon la revendication 1, comprenant en outre un corps d'armoire, un mécanisme de détection (20), un mécanisme de commande (10),
le corps d'armoire comprenant un plateau (201), le plateau étant disposé sur le corps d'armoire, le mécanisme de détection étant disposé dans le corps d'armoire, le mécanisme de détection (20) étant conçu pour détecter une dimension d'un article (300) et une position de l'article (300) sur le plateau (201), et le mécanisme de commande (10) étant conçu pour commander les états de travail du mécanisme de détection (20) et du dispositif de renversement pour commander au dispositif de renversement de placer l'article (300) au niveau d'une position désignée du plateau (201) en fonction d'un résultat de détection du mécanisme de détection (20).

7. Armoire de rangement présentant le dispositif de renversement selon la revendication 6, comprenant en outre :
un mécanisme de véhicule télescopique (203), qui est disposé dans le corps d'armoire, le corps d'armoire étant en outre pourvu d'un orifice de prélèvement (202), et le dispositif de renversement étant disposé au niveau de l'orifice de prélèvement (202) ou du mécanisme de véhicule télescopique (203).
